# EUROPÄISCHE PATENTSCHRIFT

(11) **EP 1 186 488 B1**
(45) Veröffentlichungstag und Bekanntmachung des Hinweises auf die Patenterteilung: **08.10.2008**
(21) Anmeldenummer: 01120471.6
(22) Anmeldetag: 28.08.2001
(51) Int. Cl.: B60R 25/00, B60R 25/10, E05B 65/36

(54) **Schaltungsanordnung zur Verhinderung von Manipulationen an elektrischen Verbrauchern von Kraftfahrzeugen**
Circuit for preventing tampering with vehicle electrical devices
Circuit de prévention contre la manipulation des dispositifs électriques d'un véhicule

(30) Priorität: 06.09.2000 DE 10043821
(43) Veröffentlichungstag der Anmeldung: 13.03.2002
(73) Patentinhaber: ADAM OPEL AG, 65423 Rüsselsheim (DE)
(72) Erfinder: Diehl, Peter G., Dipl.-Ing., 64521 Gross-Gerau (DE); Müller, Werner Robert, Dipl.-Ing., 64347 Griesheim (DE)

(56) Entgegenhaltungen:
- DE-A- 3 149 071
- DE-A- 19 647 652
- DE-U- 8 709 695

## Beschreibung

Die Erfindung betrifft eine Schaltungsanordnung zur Verhinderung von Manipulationen an mehreren, mittels eines Kabelsatzes parallel angesteuerten elektrischen Verbrauchern gemäß dem Oberbegriff des Patentanspruchs 1.
Die US 5,896,768 beschreibt eine selektive Ansteuervorrichtung für Verriegelung von Fahrzeugtüren. Eine Schaltvorrichtung mit mindestens drei Schaltkontakten entriegelt in einer Schaltposition nur eine Untergruppe der Türen.

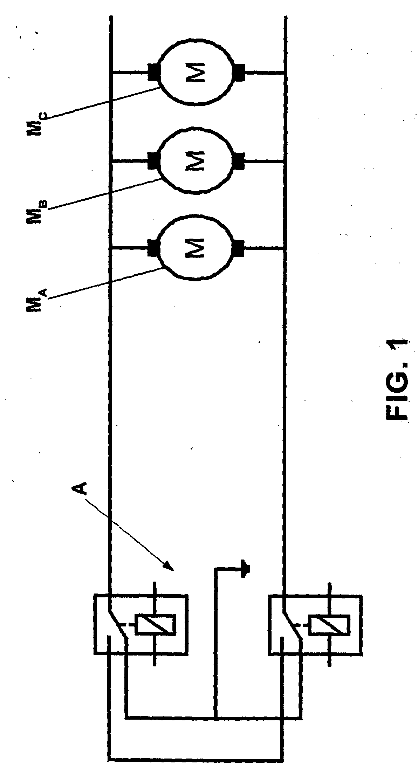

Bei einer Ansteuerung mehrerer Motoren gleicher Funktionslogik, wie beispielsweise die Zentralverriegelungsmotoren der Türen und die Motoren des Tankdeckelverschlusses eines Kraftfahrzeuges, wird in der Regel nur ein Aktuator A, z. B. ein Umpolrelais, verwendet und die Motoren M_{A} bis M_{C} werden parallel angesteuert (Fig. 1).

Der Nachteil einer solchen Schaltungsanordnung besteht darin, dass es durch Manipulation am Kabelsatz, z. B. durch Auftrennen einer Steuerleitung zwischen Motor M_{B} und Motor M_{C} und Anlegen einer elektrischen Spannung an dieser Trennstelle, möglich ist, alle Motoren M_{A} bis M_{C} anzusteuern und somit beispielsweise eine Fahrzeugtür unerlaubt öffnen zu können. Dabei ist zu berücksichtigen, dass manche Abschnitte des die Verbraucher (Motoren) verbindenden Kabelsatzes zugänglicher sind als andere Abschnitte des Kabelsatzes innerhalb des Kraftfahrzeuges. Darüber hinaus bedürfen bestimmte prioritätshöhere Verbraucher einen größeren Zugriffsschutz als andere prioritätsärmere Verbraucher. Beispielsweise sind die Stellmotoren für die Verriegelung der Fahrzeugtüren des Kraftfahrzeuges mit einer höheren Priorität behaftet als z. B. der Stellmotor für einen Tankdeckelverschluss, da in der Regel eine Manipulation im Bereich der Türen des Kraftfahrzeuges erfolgt, um durch Unbefugte Zugriff auf das Innere des Kraftfahrzeuges zu erlangen.

Weiterhin ist häufig der Stellmotor für den Tankdeckelverschluss in dessen unmittelbarer Nähe angebracht. Unbefugte, die diesen Umstand kennen, nutzen ihn, um den Stellmotor für den Tankdeckelverschluss zu entfernen oder zumindest unbrauchbar zu machen. Durch Verwendung einer fahrzeugfremden Schaltungsanordnung kann an dieser Stelle eine Entriegelung der Fahrzeugtüren bewirkt werden, so dass der Unbefugte Zugang zum Inneren des Kraftfahrzeuges erlangt, zumindest aber die Zugang erleichtert wird.

Aus der DE 31 49 071 C2 ist eine Zentralverriegelung mit Zweitürbedienung für Kraftwagen bekannt. Die vorderen Türen weisen jeweils eine Stelleinrichtung in Form eines Arbeitselementes sowie eine elektrische Umschalteinrichtung (Aktuator) auf, die durch den Fahrzeugschlüssel von außen sowie ein Innenbetätigungselement von Innen für die zentrale Verriegelung betätigbar ist. Weiterhin ist ein über einen Schlüssel zu betätigender Anlassschalter für die Antriebsmaschine vorgesehen. Relais ermöglichen bei im Anlassschalter befindlichen Schlüssel nur über das Innenbetätigungselement der lenkradseitigen Fahrertür eine verriegelnde Betätigung der Zentralverriegelung, während über das Innenbetätigungselement der beifahrerseitigen Fahrertür nur ein mechanisches Verriegeln dieser einzelnen Türen möglich ist. Dadurch wird lediglich eine versehentliche Fahrzeugverriegelung ausgeschlossen.

Ferner ist aus dem DE-GM-87 09 695.1 ein Fahrzeugchassis mit elektrischer Zentralverriegelung und Zusteigsicherung für Kraftfahrzeuge bekannt. Die zu verriegelnden Schlösser sind jeweils mit einem Verschließkeile aktivierenden Magneten versehen, die über einen Öffnungs- und Schließkontakt mit dem Fahrertürmagnet mittels mindesten einem Taster unterbrechbar verbunden sind. Mit dem Taster werden somit von der Fahrertür aus die Schlösser der übrigen Fahrzeugtüren beeinflusst.

Es gibt weiterhin eine Vielzahl von technischen Geräten und Anlagen, die mit unterschiedlichen Verbrauchern, in der Regel Motoren, ausgestattet sind, und die besonders sensible, vor dem Zugriff sichere Bereiche aufweisen. Dies betrifft besonders Land-, Luft-, Schienen- und Wasserfahrzeuge, des weiteren Haushaltsgeräte, wie Waschmaschinen, Elektroherde usw., sowie elektronische Geräte, wie Fernsehapparate, Videorecorder und dgl. Meist sind die sensiblen Bereiche des jeweiligen Gerätes vor Fremdzugriff überhaupt nicht oder nur unzureichend geschützt.

Der Erfindung liegt die Aufgabe zu Grunde, eine Schaltungsanordnung der eingangs genannten Art zu schaffen, die bestimmte sensible Bereiche eines Kraftfahrzeugs vor Manipulationen bzw. unbefugten Zugriff in höherem Maße schützt als andere Bereiche des Kraftfahrzeugs.

Die Aufgabe wird erfindungsgemäß durch die Vorrichtung mit den Merkmalen des Patentanspruch 1 gelöst. Das Entkopplungsglied grenzt somit eine Stellrichtung prioritätshoher Verbraucher, z. B. Motoren, die für den Anwender unzugänglich sein sollen, von den Bereichen des Kabelsatzes, die für den Anwender weiter zugänglich sein sollen, ab, so dass eine Manipulation bzw. ein unbefugter Zugriff in die Stellrichtung der unzugänglichen Verbraucher nicht mehr möglich ist. Entgegen einer vollständig separierten Ansteuerung hochpriorer Verbraucher kann daher mit dem Entkopplungsglied die gefährdete Stellrichtung der vor Manipulationen zu bewahrenden Verbraucher kostengünstig geschützt werden. Beim Vorsehen einer großen Anzahl von Verbrauchern können beispielsweise eine Reihe von Relais und somit auch Kabel zu einer Spannungsversorgung an die Relais eingespart werden. Bei der erfindungsgemäßen Schaltungsanordnung ist es somit nicht mehr möglich, durch Auftrennen des Kabelsatzes am zugänglichen Verbraucher und Anlegen einer Fremdspannung die geschützte Stellrichtung des Verbrauchers oder mehrerer Verbraucher anzusteuern.

Nach der Erfindung sind die Verbraucher und die zugehörigen Aktuatoren an eine gemeinsame Spannungsversorgung angeschlossen (das Bordnetz eines Kraftfahrzeuges). Dabei ist das Entkopplungsglied in die gemeinsame Spannungsversorgung der Verbraucher und der zugehörigen Aktuatoren geschaltet.

Alternativ dazu kann das Entkopplungsglied an eine von der gemeinsamen Spannungsversorgung der Verbraucher und der zugehörigen Aktuatoren unabhängige andere Spannungsversorgung angeschlossen sein. Damit besteht die Möglichkeit der separierten Spannungsversorgung für die entsprechende Stellrichtung der Verbraucher. Hierbei können sich funktionelle Vorteile in der Art ergeben, dass die geschützte Stellrichtung der prioritätshöheren Verbraucher mit einer anderen Funktionslogik betrieben werden kann.

Ferner ist nach einer bevorzugten Weiterbildung der Schaltungsanordnung das Entkopplungsglied als Relais ausgebildet.

Gemäß einer anderen Ausführungsform der Erfindung sind das Entkopplungsglied und gegebenenfalls die Aktuatoren als Ersatzschaltung ausgebildet, die Transistoren, z. B. Feldeffekt- oder Bi-Polar-Transistoren, oder dergleichen elektronische Schaltelemente aufweisen.

Weiterhin sind die Aktuatoren vorzugsweise als Umpolrelais ausgebildet.

Nach einer bevorzugten Ausbildung der erfindungsgemäßen Schaltungsanordnung sind die Verbraucher vorzugsweise Stellmotoren eines Zentralverriegelungssystems eines Kraftfahrzeuges. Ferner sind die prioritätshöheren Verbraucher vorzugsweise Stellmotoren zur Verriegelung der Türen und die prioritätsärmeren Verbraucher vorzugsweise Stellmotoren für eine Tankdeckelverriegelung und/oder eine Heck- oder Motorklappenverriegelung des Kraftfahrzeuges. Ist etwa das Entkopplungsglied an eine von der gemeinsamen Spannungsversorgung der Stellmotoren unabhängige andere Spannungsversorgung angeschlossen, kann eine andere Funktionslogik z. B. bei einem Kraftfahrzeug so gestaltet sein, dass bei eingeschalteter Zündung alle drei oder fünf Motoren zur Betätigung der Zentralverriegelung betätigbar sind, während bei ausgeschalteter Zündung nur zwei oder vier Motoren für die Zentralverriegelung der Fahrzeugtüren aktiviert werden. Es werden somit die unterschiedlichen Schaltzustände des Zündschlosses besser ausgenutzt. Bei der Batterieversorgung hingegen werden nur die zwei oder vier Motoren, d. h. ohne den Motor für den Tankdeckelverschluss aktiviert.

Der der Erfindung zugrunde liegende Gedanke wird in der nachfolgenden Beschreibung anhand von Ausführungsbeispielen, die in den Zeichnungen dargestellt sind, näher beschrieben. Es zeigen:
- Fig. 1: eine Schaltungsanordnung mit einer Ansteuerung mehrerer Motoren gleicher Funktionslogik am Beispiel eines Zentralverriegelungssystems der Türen und des Tankdeckelverschlusses eines Kraftfahrzeuges nach dem Stand der Technik,
- Fig. 2: eine erfindungsgemäße Schaltungsanordnung zur Verhinderung von Manipulationen von Verbrauchern am Beispiel eines Zentralverriegelungssystems der Türen und des Tankdeckelverschlusses eines Kraftfahrzeuges,
- Fig. 3: eine Abwandlung der Schaltungsanordnung nach Fig. 1.

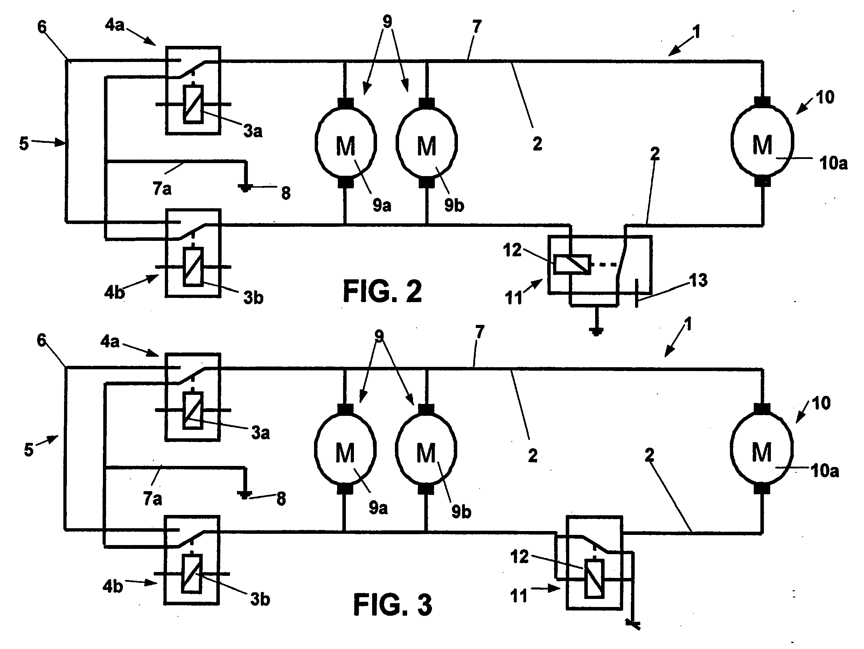

Die jeweilige Schaltungsanordnung 1 nach den Fig. 2 und 3 umfasst einen Kabelsatz 2, in dem zwei als Umpolrelais 3a und 3b ausgebildete Aktuatoren 4a und 4b vorgesehen sind, die an eine zentrale Spannungsversorgung 5 angeschlossen sind. Dabei verbindet ein Plus-Kabel 6 die beiden Aktuatoren 4a und 4b, während ein Teilkabel 7a eines Kabelstranges 7 an Masse 8 anliegt. In den Kabelstrang 7 sind einerseits zwei Verbraucher 9 höherer Priorität parallel geschaltet, die als Stellmotoren 9a und 9b für die Fahrzeugtüren eines nicht näher dargestellten Zentralverriegelungssystem eines Kraftfahrzeuges dienen.

Ferner ist in den Kabelstrang 7 ein weiterer Verbraucher 10 niedrigerer Priorität parallel geschaltet, der als Stellmotor 10a für einen nicht dargestellten Tankdeckelverschluss des Zentralverriegelungssystems des Kraftfahrzeuges vorgesehen ist.

Des weiteren ist in den Kabelstrang 7 zwischen den Verbrauchern 9 höherer Priorität und dem Verbraucher 10 niedrigerer Priorität ein Entkopplungsglied 11 geschaltet. Dieses Entkopplungsglied 11 ist als Relais 12 ausgebildet und ist mit einer separaten Spannungsversorgung 13 versehen, die nicht zur zentralen Spannungsversorgung 5 gehört. Durch die separate Spannungsversorgung 13 des Entkopplungsgliedes 11 ergeben sich funktionelle Vorteile, wonach die Stellrichtung der Stellmotoren 9a, 9b bzw. 10a mit einer anderen Funktionslogik betrieben werden können. Das Entkopplungsglied 11 trennt die Verbraucher 9 höherer Priorität von dem Verbraucher 10 niedrigerer Priorität, so dass ein Auftrennen des Kabelsatzes 2 und Anlegen einer Fremdspannung zwischen den Verbrauchern 9 höherer Priorität und dem Verbraucher 10 niedrigerer Priorität verhindert wird. Sonach kann die entsprechende Stellrichtung der Stellmotoren 9a und 9b nicht mehr von Unbefugten angesteuert werden. Damit wird ein unerwünschter Zugriff bzw. eine Manipulation der Verbraucher 9 höherer Priorität verhindert, da diese im durch die das Entkopplungsglied 11 geschützten Bereich des Kabelsatzes 2 liegen.

Die Schaltungsanordnung nach Fig. 3 entspricht in wesentlichen Teile der Schaltungsanordnung nach Fig. 2. Jedoch ist das Entkopplungsglied 11 nicht mit einer eigenständigen Spannungsversorgung versehen, sondern in die zentrale Spannungsversorgung 5 des Kraftfahrzeuges eingebunden.

## Patentansprüche

1. Schaltungsanordnung zur Verhinderung von Manipulationen von mehreren elektrischen Verbrauchern eines Kraftfahrzeuges,
- die eine gleiche Funktionslogik aufweisen,
- durch mindestens einen Aktuator (3a, 3b) betätigbar sind,
- die prioritätshohe Verbraucher (9) und prioritätsniedrige Verbraucher (10) beinhalten,
- die über einen Kabelsatz (2) miteinander verbunden sind,
**dadurch gekennzeichnet, dass**
eine gemeinsame Spannungsversorgung (5) mit den elektrischen Verbrauchern (9, 10) und dem mindestens einen Aktuator (3) durch den Kabelsatz (2) verbunden ist und ein Entkopplungsglied (11) zwischen die prioritätshohen Verbraucher (9) und den prioritätsniedrigen Verbraucher (10) in den Kabelsatz (2) geschaltet ist, wobei das Entkopplungsglied die gemeinscume Spannungsversorgung zwischen den prioritätshohen Verbrauchern (9) und dem prioritätsniedrigen Verbraucher trennt.

2. Schaltungsanordnung nach Anspruch 1, **dadurch gekennzeichnet, dass** das Entkopplungsglied (11) an eine von der gemeinsamen Spannungsversorgung (5) der Verbraucher (9, 10) und der zugehörigen Aktuatoren (4) unabhängige andere Spannungsversorgung (13) angeschlossen ist.

3. Schaltungsanordnung nach den Ansprüchen 1 bis 2, **dadurch gekennzeichnet, dass** das Entkopplungsglied (11) als Relais (12) ausgebildet ist.

4. Schaltungsanordnung nach den Ansprüchen 1 bis 2, **dadurch gekennzeichnet, dass** das Entkopplungsglied (11) als Ersatzschaltung ausgebildet ist, die Transistoren oder dergleichen elektronische Schaltelemente aufweist.

5. Schaltungsanordnung nach den Ansprüchen 1 bis 4, **dadurch gekennzeichnet, dass** die Aktuatoren (4) als Umpolrelais (3a, 3b) ausgebildet sind.

6. Schaltungsanordnung nach den Ansprüchen 1 bis 5, **dadurch gekennzeichnet, dass** die Verbraucher (9, 10) Stellmotoren (9a, 9b, 10a) eines Zentralverriegelungssystems des Kraftfahrzeuges sind.

7. Schaltungsanordnung nach den Ansprüchen 1 bis 6, **dadurch gekennzeichnet, dass** die prioritätshöheren Verbrauchern (9) vorzugsweise Stellmotoren (9a, 9b) zur Verriegelung der Türen und die prioritätsärmeren Verbraucher (10) vorzugsweise Stellmotoren (10a) für eine Tankdeckelverriegelung und/oder eine Heck- oder Motorklappenverriegelung des Kraftfahrzeuges sind.

## Claims

1. Circuit for preventing tampering with multiple motor vehicle electrical devices, which
- comprise the same functions,
- are operable by at least one actuator (3a, 3b)
- contain high priority (9) and low priority (10) devices
- are connected through a cable network (2)
**characterized in that**
a mutual power supply is connected through a cable network with the electrical devices (9, 10) and the (at least one) actuator (3); in addition, a decoupling device (11) is circuited between the high priority device (9) and the low priority device (10) in the cable network, wherein the decoupling device divides the mutual power supply between the high priority devices (9) and the the low priority device.

2. Circuit arrangement according to claim 1, **characterized in that** the decoupling device (11) is attached to another power supply, independent from the mutual power supply (5) of the devices (9, 10) and the corresponding actuators (4).

3. Circuit arrangement according to the claims 1 through 2, **characterized in that** the decoupling device (11) is configured as a breaker.

4. Circuit arrangement according to claims 1 through 2, **characterized in that** the decoupling device (11) is configured as a replacement circuit, which comprises transistors or similar electronic circuit elements.

5. Circuit arrangement according to the claims 1 through 4, **characterized in that** the actuators (4) are configured as pole change breakers.

6. Circuit arrangement according to the claims 1 through 5, **characterized in that** the devices (9, 10) are servo motors (9a, 9b, 10a) of a motor vehicle central locking system.

7. Circuit arrangement according to the claims 1 through 6, **characterized in that** the high priority devices (9) are preferably servo motors (9a, (b) for the locking of doors and that the lower priority devices (10) are preferably servo motors (10a) for locking a fuel tank cap and/or locking the hatch or hood of a motor vehicle.

## Revendications

1. Circuit de prévention contre la manipulation des dispositifs électriques d'un véhicule,
- qui présentent la même logique fonctionnelle,
- qui peuvent être actionner à travers au moins un actionneur (3a, 3b),
- qui comportent des dispositifs de haute priorité (9) et des dispositifs de basse priorité (10),
- qui sont reliés entre eux par un kit de câblage (2),
**caractérisé en ce que**
une alimentation commune (5) est reliée avec les dispositifs électriques (9, 10) et au moins un actionneur (3) par le kit de câblage (2) et que, un élément de découplage (11) est couplé entre les dispositifs de haute priorité (9) et le dispositif de basse priorité (10) au kit de câblage (2), étant donné que l'élément de découplage sectionne l'alimentation entre les dispositifs de haute priorité (9) et le dispositif de basse priorité.

2. Circuit de prévention selon la revendication 1, **caractérisé en ce que** l'élément de découplage (11) est connecté à une autre alimentation (13), indépendante de l'alimentation commune (5) des dispositifs (9, 10) et des actionneurs correspondants (4).

3. Circuit de prévention selon les revendications 1 à 2, **caractérisé en ce que** l'élément de découplage (11) est formé sous forme d'un relais (12).

4. Circuit de prévention selon les revendications 1 à 2, **caractérisé en ce que** l'élément de découplage (11) est réalisé sous forme d'un circuit équivalent, présentant des transistors ou bien des éléments semblables de commutation électroniques.

5. Circuit de prévention selon les revendications 1 à 4, **caractérisé en ce que** les actionneurs (4) sont réalisés sous forme de relais d'inversion (3a, 3b).

6. Circuit de prévention selon les revendications 1 à 5, **caractérisé en ce que** les dispositifs (9, 10) sont des servomoteurs (9a, 9b, 10a) d'un système de verrouillage centralisé du véhicule automobile.

7. Circuit de prévention selon les revendications 1 à 6, **caractérisé en ce que** les dispositifs de haute priorité (9) sont de préférence des servomoteurs (9a, 9b) pour le verrouillage des portes alors que les dispositifs de plus basse priorité (10) sont des servomoteurs (10a) pour un verrouillage du couvercle de réservoir et/ou un verrouillage du hayon ou du capot moteur du véhicule automobile.
